# EUROPEAN PATENT APPLICATION

(11) **EP 2 676 757 A1**
(43) Date of publication of application: **25.12.2013**
(21) Application number: 11824293.2
(22) Date of filing: 20.03.2011
(51) Int. Cl.: B23K 1/012

(54) **RELIABLE WELDING METHOD FOR MICROWAVE DIELECTRIC CERAMICS AND METAL**

(30) Priority: 18.02.2011 CN 201110040636
(71) Applicant: Chengdu Tiger Microwave Technology Co., Ltd., Chengdu, Sichuan 611731 (CN)
(72) Inventor: WU, Chuanzhi, Chengdu Sichuan 611731 (CN)
(74) Representative: Gulde Hengelhaupt Ziebig & Schneider
(86) International application number: PCT/CN2011/071981
(87) International publication number: WO 2012/109808

(57) **Abstract**

The present invention discloses a method for reliably soldering microwave dielectric ceramics with metal, which comprises the following steps of: (1) coating lead-free solder paste (10) on a silver-plated end face of microwave dielectric ceramics (5) and fixing the microwave dielectric ceramics on a metal base (6), then placing the microwave dielectric ceramics and the metal base between an upper positioning plate (1) and a lower positioning plate (2) to form a component to be soldered; (2) putting the component to be soldered in a container filled with perfluoropolyether liquid; (3) heating the perfluoropolyether liquid until perfluoropolyether vapor (11) is formed; (4) preserving heat for 0.5 to 2 minutes during which the lead-free solder paste (10) is molten to form a soldering side; and (5) cooling. In the method adopting the way of vapor soldering, a strict process of heating up, then soldering under heat preservation and finally cooling is implemented, thus thermal stress generated during the soldering of dielectric ceramics and metal material is reduced, reliability of a solder structure is ensured, porosity of the soldering side is effectively lowered, soldering quality is improved, soldering cost is reduced, and the demand of large-scale production can be met.

## Description

### Technical Field

The present invention relates to the technical field of soldering, more particularly to a method for reliably soldering microwave dielectric ceramics with metal.

### Background

Microwave dielectric ceramics, a novel functional ceramic material that has been developed over the recent twenty years, is the ceramic material used as a dielectric material in circuit with microwave frequency (mainly in a frequency band from 300MHz to 30GHz) and realizing one or multiple functions, and becomes the key material for manufacturing microwave dielectric filter and resonator. Owing to excellent properties such as high dielectric coefficient, low dielectric loss and small temperature coefficient, microwave dielectric ceramics could meet the demands of microwave circuit on miniaturization, integration, high reliability and low cost, as a result, it is suitable for the manufacturing of multiple types of microwave components and can be extensively applied in the fields of radar, automobile telephone, wireless telephone, GPS antenna, etc.

Dielectric filter is the key device in the next generation of civil mobile communication equipment, and the preparation of microwave ceramics dielectric material and the soldering process of ceramics and metal are the key that determines the quality of dielectric filter. Only by well solving the problem about the soldering process of ceramics and metal and by causing its performances to conform to the use requirements in structural environment of devices can dielectric filter remain invincible in future market competitions.

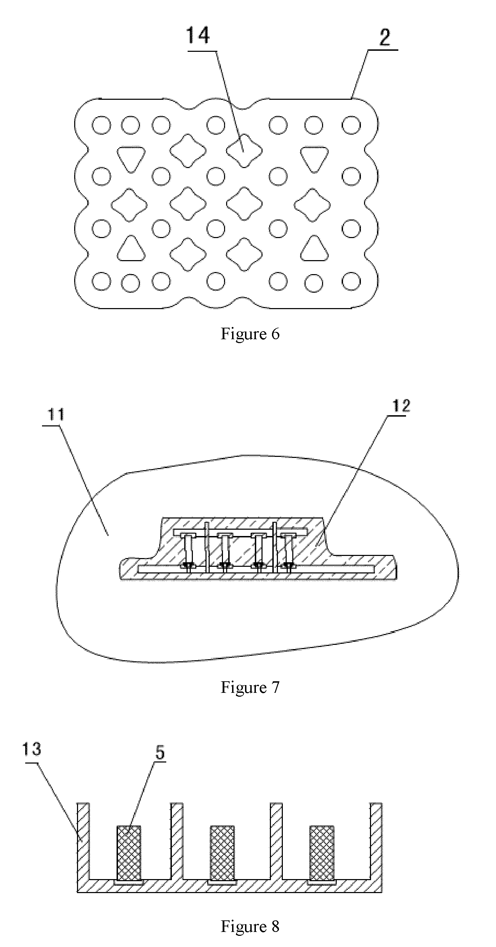

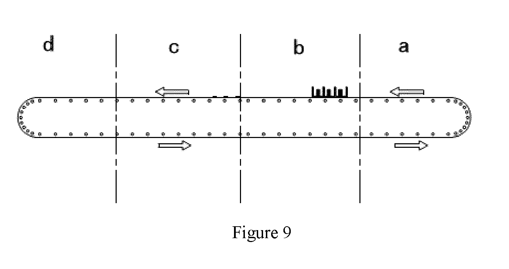

However, the soldering of microwave dielectric ceramics and metal is chiefly completed by total hot-air reflow soldering machine, shown as FIG 8, a layer of lead-free solder paste is uniformly coated on a silver-plated end face of microwave dielectric ceramics 5 at first, the microwave dielectric ceramics is then put in a positioning groove of an aluminum-made cavity; its working principle is shown as FIG 9, namely a typical working procedure of a multi-temperature area reflow soldering machine; the multi-temperature area may be divided into four working areas: a heating area a, a heat preserving area b, a soldering area c and a cooling area d; solvent and gas in the solder paste are evaporated when a soldered component enters the heating area a that is also known as a drying area. Meanwhile, soldering flux in the solder paste moisturizes a positioning shallow pit at the bottom of the cavity and a silver-plated end face of a dielectric cylinder. The microwave dielectric ceramics 5 and the silver-plated aluminum-made cavity 13 are sufficiently preheated when the soldered component enters the heat preserving area b. When the soldered component enters the soldering area c, temperature rises rapidly to molt the solder paste, and liquid-state solder moisturizes the soldering area at the bottom of the cavity and the end face of the microwave dielectric ceramics and diffuses, spreads or reflows to be mixed into a soldering side. Finally, the soldered component enters the cooling area d to solidify solder joint, at this moment, reflow soldering of microwave dielectric ceramics and metal is completed.

### The defects in the prior art are mainly as follows:

(1) the total hot-air reflow soldering machine is mainly featured by soldering of surface-mounted devices and its internal working area is not high, so soldering is unavailable for ultrahigh metal cavity, and its applicable scope is relatively narrow;
(2) the convection of hot air will be hindered owing to the presence of sidewalls of the inner cavity of filter, the temperature inside the cavity of filter becomes uneven, thus thermal stress is generated inside the microwave dielectric ceramics to result directly in ceramic breakage and cause a severe impact to soldering quality;
(3) soldering quality is affected by large property differences between the aluminum-made cavity 13 of filter and the microwave dielectric ceramic material, for example, there is large difference between the aluminum-made cavity 13 of filter and the microwave dielectric ceramic material in the aspect of coefficient of thermal expansion, so the soldering side is liable to be torn after strict environmental temperature shock to further lead to soldering failure, secondly, the heat conductivity of the aluminum-made cavity 13 of filter is far more than that of the ceramics, so its heating and cooling are faster, and strict controls for identical heating and cooling of the aluminum-made cavity 13 and the ceramics would induce very long soldering procedure and remarkable increase of soldering cost.
(4) In order to prevent silver-plated surface from being oxidized at high temperature, inert gases, such as nitrogen, are required in current reflow soldering, which also raises soldering cost correspondingly.
(5) There is no vent hole on the soldering surface of metal, which could cause unsmooth discharge of gases in the solder paste and further give rise to poor soldering, in this case, the structural reliability of the soldered component is negatively affected.
(6) due to the huge difference between ceramics and metal cavity in expansion coefficient, the soldered component of both couldn't pass the strict test on temperature reliability of products even if it is successfully soldered by the total hot-air reflow soldering machine.

### Disclosure to the Invention

### Technical Problem

The objective of the present invention is to overcome the defects in the prior art, and provide a method for reliably soldering microwave dielectric ceramics with metal, which settles the problem of large property difference between aluminum-made cavity of filter in current total hot-air reflow soldering and microwave dielectric ceramics material, enhances the environmental reliability of soldered structural member, is not limited by the shape and structure of soldered member and saves soldering cost.

### Technical Solution

The objective of the present invention is implemented by the following technical proposal: a method for reliably soldering microwave dielectric ceramics with metal comprises the following steps of: (1) uniformly coating a layer of lead-free solder paste on a silver-plated end face of microwave dielectric ceramics and fixing the microwave dielectric ceramics on a positioning groove of a silver-plated metal base, then placing the microwave dielectric ceramics and the silver-plated metal base, as a whole, in notches of an upper positioning plate and a lower positioning plate, and clamping and fixing the upper positioning plate and the lower positioning plate through a positioning pin to form a component to be soldered, wherein the notches are provided with heat insulating gaskets therein; (2) putting the component to be soldered in a sealed container filled with perfluoropolyether liquid; (3) heating the perfluoropolyether liquid at the rate of 0.5 to 3 °C/sec until uniform perfluoropolyether vapor is formed; (4) preserving heat for 0.5 to 2 minutes until the temperature of the component to be soldered is identical to that of the vapor, wherein in this process, the perfluoropolyether vapor is subjected to heat exchange with a contact face of the silver-plated end face and the microwave dielectric ceramics and a liquid film is formed, thus the lead-free solder paste covered by the liquid film is molten to form a soldering side; and (5) cooling at the rate of 0.5 to 3 °C/sec.

Vent holes are uniformly distributed on the silver-plated end face.

A positioning groove is arranged on the silver-plated end face.

Through holes are arranged on the upper positioning plate and the lower positioning plate.

The heat insulating gasket is made of polyfluortetraethylene material.

The notches of the upper positioning plate and the lower positioning plate are provided with the heat insulating gaskets therein.

The entire component to be soldered is clamped and fixed by the positioning pin.

### Advantages

The present invention has the advantages as follows: a brand-new soldering tool is adopted, the way of vapor soldering is utilized, dielectric ceramics and metal can be heated up and cooled uniformly and synchronously through a strict process of heating up, then soldering under heat preservation and finally cooling by heating the perfluoropolyether liquid having extremely steady chemical properties, thus thermal stress generated during the soldering of dielectric ceramics and metal material is reduced, reliability of a solder structure of dielectric ceramics and metal material is ensured, and simultaneously, by using a proper soldering base on the premise of not using evacuation equipment, porosity of the soldering side is effectively lowered, soldering quality is improved, soldering cost is reduced, and the demand of large-scale production in the field of civil communication can be met.

### BRIEF DESCRIPTION OF THE DRAWINGS

FIG 1 is a structural schematic diagram of the device used in the invention.
FIG 2 is a partial enlarged view of the area A in FIG 1.
FIG 3 is a top view of the silver-plated metal base.
FIG 4 is a sectional view of the silver-plated metal base.
FIG 5 is a schematic diagram of the upper positioning plate.
FIG 6 is a schematic diagram of the lower positioning plate.
FIG 7 is a working schematic diagram of the invention.
FIG 8 is a schematic diagram of the installation structure of the prior art.
FIG 9 is a working schematic diagram of the prior art.

In the figures, 1 - upper positioning plate, 2 - lower positioning plate, 3 - heat insulating gasket, 4 - notch, 5 - microwave dielectric ceramics, 6 - silver-plated metal base, 7 - positioning groove, 8 - positioning pin, 9 - vent hole 10 - lead-free solder paste, 11 - perfluoropolyether liquid, 12 - liquid film, 13 - aluminum-made cavity, 14 - through hole, a - heating area, b - heat preserving area, c - soldering area, and d - cooling area.

### Detailed Description of the Embodiments

Further description is made below to the present invention with reference to the embodiments; however, the scope is not limited to the description below.

### Embodiment 1

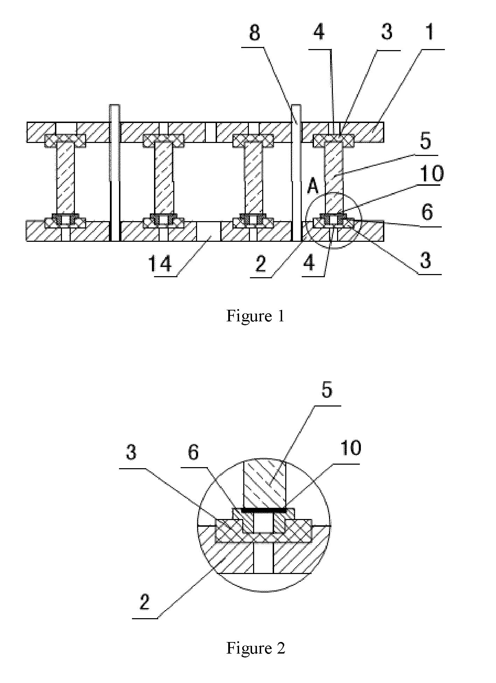

Shown as FIG 1 and FIG 2, a method for reliably soldering microwave dielectric ceramics with metal comprises the following steps of: (1) uniformly coating a layer of lead-free solder paste 10 on a silver-plated end face 6 of microwave dielectric ceramics 5 and fixing the microwave dielectric ceramics on a positioning groove 7 of a silver-plated metal base 6, then placing the microwave dielectric ceramics and the silver-plated metal base, as a whole, in notches 4 of an upper positioning plate 1 and a lower positioning plate 2, and clamping and fixing the upper positioning plate 1 and the lower positioning plate 2 through a positioning pin 8 to form a component to be soldered; (2) putting the component to be soldered in a sealed container filled with perfluoropolyether liquid; (3) heating the perfluoropolyether liquid at the rate of 0.5 °C/sec until uniform perfluoropolyether vapor 11 is formed; (4) preserving heat for 2 minutes until the temperature of the component to be soldered is identical to that of the vapor, wherein in this process, the perfluoropolyether vapor 11 is subjected to heat exchange with a contact face of the silver-plated end face 6 and the microwave dielectric ceramics 5 and a liquid film 12 is formed, thus the lead-free solder paste 10 covered by the liquid film 12 is molten to form a soldering side; and (5) cooling at the rate of 0.5 °C/sec.

### Embodiment 2

A method for reliably soldering microwave dielectric ceramics with metal comprises the steps 1 and 2 same as those in the embodiment 1 and further comprises the steps of (3) heating the perfluoropolyether liquid at the rate of 3 °C/sec until uniform perfluoropolyether vapor 11 is formed; (4) preserving heat for 0.5 minutes until the temperature of the component to be soldered is identical to that of the vapor, wherein in this process, the perfluoropolyether vapor 11 is subjected to heat exchange with a contact face of the silver-plated end face 6 and the microwave dielectric ceramics 5 and a liquid film 12 is formed, thus the lead-free solder paste 10 covered by the liquid film 12 is molten to form a soldering side; and (5) cooling at the rate of 3 °C/sec.

### Embodiment 3

A method for reliably soldering microwave dielectric ceramics with metal comprises the steps 1 and 2 same as those in the embodiment 1 and further comprises the steps of (3) heating the perfluoropolyether liquid at the rate of 2 °C/sec until uniform perfluoropolyether vapor 11 is formed; (4) preserving heat for 1 minute until the temperature of the component to be soldered is identical to that of the vapor, wherein in this process, the perfluoropolyether vapor 11 is subjected to heat exchange with a contact face of the silver-plated end face 6 and the microwave dielectric ceramics 5 and a liquid film 12 is formed, thus the lead-free solder paste 10 covered by the liquid film 12 is molten to form a soldering side; and (5) cooling at the rate of 2 °C/sec.

### Embodiment 4

A method for reliably soldering microwave dielectric ceramics with metal comprises the steps 1 and 2 same as those in the embodiment 1 and further comprises the steps of (3) heating the perfluoropolyether liquid at the rate of 1 °C/sec until uniform perfluoropolyether vapor 11 is formed; (4) preserving heat for 2 minutes until the temperature of the component to be soldered is identical to that of the vapor, wherein in this process, the perfluoropolyether vapor 11 is subjected to heat exchange with a contact face of the silver-plated end face 6 and the microwave dielectric ceramics 5 and a liquid film 12 is formed, thus the lead-free solder paste 10 covered by the liquid film 12 is molten to form a soldering side; and (5) cooling at the rate of 1 °C/sec.

### Embodiment 5

A method for reliably soldering microwave dielectric ceramics with metal comprises the steps 1 and 2 same as those in the embodiment 1 and further comprises the steps of (3) heating the perfluoropolyether liquid at the rate of 1 °C/sec until uniform perfluoropolyether vapor 11 is formed; (4) preserving heat for 1 minute until the temperature of the component to be soldered is identical to that of the vapor, wherein in this process, the perfluoropolyether vapor 11 is subjected to heat exchange with a contact face of the silver-plated end face 6 and the microwave dielectric ceramics 5 and a liquid film 12 is formed, thus the lead-free solder paste 10 covered by the liquid film 12 is molten to form a soldering side; and (5) cooling at the rate of 1 °C/sec.

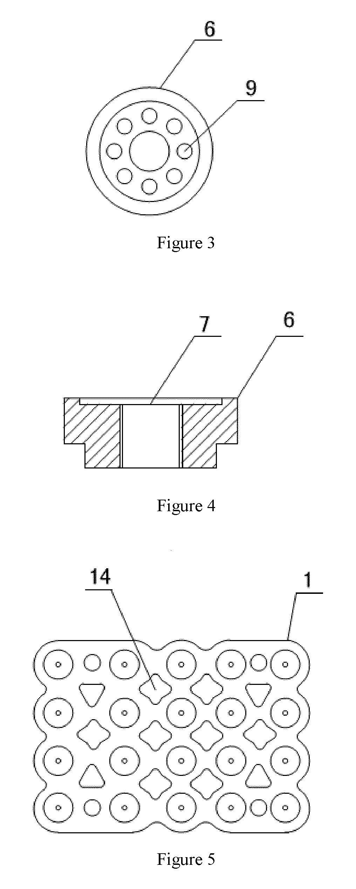

Shown as FIG 3 and FIG 4, vent holes 9 are uniformly distributed on the silver-plated metal base 6 and used for removing gas generated by solder paste in the process of soldering, thus air stack on the soldering side can be reduced, soldering quality is improved, the use of evacuation equipment is avoided, and soldering cost is lowered; meanwhile, a positioning groove 7 is arranged on the soldering side of the silver-plated metal base 6 in order to facilitate the soldered positioning of the microwave dielectric ceramics 5.

Shown as FIG 5 and FIG 6, some irregular through holes 14 are arranged on the upper positioning plate 1 and the lower positioning plate 2 to ensure smooth convection of heat energy, and the upper positioning plate 1 and the lower positioning plate 2 are made of copper.

The heat insulating gasket 3 is made of polyfluortetraethylene material.

The heat insulating gasket 3 is capable of isolating heat conduction between the upper positioning plate 1 and the component to be soldered and between the lower positioning plate 2 and the component to be soldered, further avoiding the generation of thermal stress in the microwave dielectric ceramics 5 in the process of soldering.

The positioning pin 8 has the function of rapidly and accurately assembling various parts of the entire soldering tool.

Shown as FIG 7, a soldered component is directly 'immersed' in the perfluoropolyether vapor 11 during vapor solder, the perfluoropolyether vapor 11 for covering performs heat transfer on the surface of the soldered component by means of condensation, the perfluoropolyether vapor 11 having higher temperature forms the liquid film 12 on the surface of the silver-plated metal base 6 and the microwave dielectric ceramics 5 both having lower temperature, as a result, vapor soldering is also known as condensation soldering, heat generated by the conversion of the vapor from gas state to liquid state is used for heating the soldered component, and such a state change on the surface of the soldered component continues to the condition that the temperature of the component is completely identical to that of the vapor.

The adoption of perfluoropolyether liquid with extremely steady chemical properties results in rapid, uniform and consistent heat conduction in the process of vapor soldering, hence, the generation of thermal stress in the microwave dielectric ceramics 5 in the process of soldering is avoided, the environmental reliability of soldered structural member is enhanced, at the same time, the boiling point of the perfluoropolyether liquid determines maximal soldering temperature, so the phenomenon of overheated soldered component is completely impossible, and especially, its best suitability can be found in lead-free soldering.

Owing to high density of the perfluoropolyether vapor 11 and the protection provided by the liquid film 12, the entire soldering process is completed under a purified oxygen-free environment and has no need of adding any protective gas, thus oxidation of silver-plated member is avoided and soldering cost is lowered, besides, the coefficient of heat conduction of the perfluoropolyether vapor is far more than that of hot air, so corresponding cost can be lowered in comparison with convection soldering.

## Claims

1. A method for reliably soldering microwave dielectric ceramics with metal, **characterized in that** the method comprises the following steps of: (1) uniformly coating a layer of lead-free solder paste (10) on a silver-plated end face (6) of microwave dielectric ceramics (5) and fixing the microwave dielectric ceramics on a positioning groove (7) of a silver-plated metal base (6), then placing the microwave dielectric ceramics and the silver-plated metal base, as a whole, in notches (4) of an upper positioning plate (1) and a lower positioning plate (2), and clamping and fixing the upper positioning plate (1) and the lower positioning plate (2) through a positioning pin (8) to form a component to be soldered; (2) putting the component to be soldered in a sealed container filled with perfluoropolyether liquid; (3) heating the perfluoropolyether liquid at the rate of 0.5 to 3 °C/sec until uniform perfluoropolyether vapor (11) is formed; (4) preserving heat for 0.5 to 2 minutes until the temperature of the component to be soldered is identical to that of the vapor, wherein in this process, the perfluoropolyether vapor (11) is subjected to heat exchange with a contact face of the silver-plated end face (6) and the microwave dielectric ceramics (5) and a liquid film (12) is formed, thus the lead-free solder paste (10) covered by the liquid film (12) is molten to form a soldering side; and (5) cooling at the rate of 0.5 to 3 °C/sec.

2. A method for reliably soldering microwave dielectric ceramics with metal according to claim 1, **characterized in that**: vent holes are uniformly distributed on the silver-plated end face (6).

3. A method for reliably soldering microwave dielectric ceramics with metal according to claim 1, **characterized in that**: a positioning groove (7) is arranged on the silver-plated end face (6).

4. A method for reliably soldering microwave dielectric ceramics with metal according to claim 1, **characterized in that**: through holes are arranged on the upper positioning plate (1) and the lower positioning plate (2).

5. A method for reliably soldering microwave dielectric ceramics with metal according to claim 1, **characterized in that**: a heat insulating gasket (3) is made of polyfluortetraethylene material.

6. A method for reliably soldering microwave dielectric ceramics with metal according to claim 1, **characterized in that**: the notches (4) of the upper positioning plate (1) and the lower positioning plate (2) are provided with the heat insulating gaskets (3) therein.

7. A method for reliably soldering microwave dielectric ceramics with metal according to claim 1, **characterized in that**: the entire component to be soldered is clamped and fixed by the positioning pin (8).
